(19) Europäisches Patentamt
European Patent Office
Office européen des brevets

(11) Veröffentlichungsnummer: **0 228 348**
B1

(12) # EUROPÄISCHE PATENTSCHRIFT

(45) Veröffentlichungstag der Patentschrift: **02.11.89**

(51) Int. Cl.⁴: **C09B 62/04,** D06P 3/66

(21) Anmeldenummer: **86810600.6**

(22) Anmeldetag: **17.12.86**

(54) **Verfahren zur Herstellung von Reaktivfarbstoffen.**

(30) Priorität: **24.12.85 CH 5527/85**

(43) Veröffentlichungstag der Anmeldung:
**08.07.87 Patentblatt 87/28**

(45) Bekanntmachung des Hinweises auf die Patenterteilung:
**02.11.89 Patentblatt 89/44**

(84) Benannte Vertragsstaaten:
**BE CH DE FR GB IT LI**

(56) Entgegenhaltungen:
**EP-A- 0 172 790**

(73) Patentinhaber: **CIBA-GEIGY AG, Klybeckstrasse 141, CH-4002 Basel(CH)**

(72) Erfinder: **Bonometti, Emil, Laufenburgerstrasse 2/7, CH-4058 Basel(CH)**
Erfinder: **Seiler, Herbert, Dr., Leimgrubenweg 60, CH-4125 Riehen(CH)**

EP 0 228 348 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Monoacylierung von wasserlöslichen organischen Aminoverbindungen mit 2,4,6-Trifluor-s-triazin (Cyanurfluorid) nach üblichen Verfahren, der halbkontinuierlichen Reaktionsführung, d.h. so dass eine in wässriger Lösung gelöste Aminoverbindung vorgelegt wird, und Cyanurfluorid mit bestimmter Geschwindigkeit zudosiert wird, verläuft vielfach uneinheitlich, da infolge der hohen Reaktivität der primär entstehenden Monokondensationsprodukte des Cyanurfluorids diese sofort mit noch vorhandener nichtacylierter Aminoverbindung zu Dikondensationsprodukten weiterreagieren. Insbesondere wasserlösliche organische Aminoverbindungen, die mit Cyanurfluorid glatt und schnell reagieren, liessen sich daher mit Cyanurfluorid nicht einheitlich kondensieren.

Der oben geschilderte Sachverhalt hat zur Folge, dass bei der Herstellung von Reaktivfarbstoffen der weiter unten angegebenen Formel (1) häufig Nebenprodukte entstehen, was zu einer verminderten Ausbeute und ausserdem zu einer schlechteren Auswachbarkeit der nicht fixierten Farbstoffanteile führt.

Es wurde nun gefunden, dass man den Nachteil der Bildung von Dikondensationsprodukt vermeiden kann, wenn man die Kondensationen in stark saurer Lösung in Gegenwart von Alkalifluoriden durchführt.

Gegenstand der Erfindung ist somit ein Verfahren zur Herstellung von Reaktivfarbstoffen der Formel

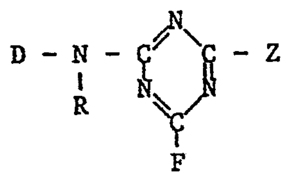

(1) ,

worin D ein sulfogruppenhaltiger Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoff, R Wasserstoff oder gegebenenfalls substituiertes $C_1$–$C_4$-Alkyl, und Z eine gegebenenfalls substituierte Aminogruppe ist, durch Kondensation von 2,4,6-Trifluor-s-triazin mit einem Aminofarbstoff der Formel

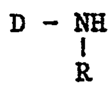

(2)

und einen Amin der Formel

$$H - Z \qquad (3)\ ,$$

dadurch gekennzeichnet, daß man 2,4,6-Trifluor-s-triazin in stark saurer Lösung und in Gegenwart eines Alkalifluorids mit einem Amin der Formel (3) in diskontinuierlicher Weise kondensiert, und anschließend das erhaltene primäre Kondensationsprodukt der Formel

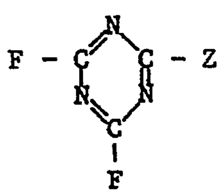

(4)

mit einem Aminofarbstoff der Formel (2) zu einem Reaktivfarbstoff der Formel (1) kondensiert.

Die Ausführung des Verfahrens geschieht vorzugsweise dadurch, daß man

a) einem Gemisch, bestehend aus einem Amin der Formel

$$H - Z \qquad (3)\ ,$$

einem Alkalifluorid und einem Lösungsmittel, bei niedriger Temperatur 2,4,6-Trifluor-s-triazin zufügt, die erhaltene Reaktionsmischung in eine Lösung eines Farbstoffes der Formel

$$D-\underset{\displaystyle R}{\underset{|}{NH}} \qquad (2)$$

eingibt, und nach vollzogener Umsetzung den gebildeten Reaktivfarbstoff der Formel (1) isoliert.

Eine weitere Ausführungsform besteht darin, daß man b) 2,4,6-Trifulor-s-triazin in Gegenwart eines Alkalifluorids gleichzeitig mit einem Aminofarbstoff der Formel (2) und einem Amin der Formel (3) zu einem Reaktivfarbstoff der Formel (1) umsetzt.

Nach dieser Verfahrensvariante geht man vorzugsweise so vor, daß man einem Gemisch, bestehend aus einem Amin der Formel (3), einem Alkalifluorid, einem Farbstoff der Formel (2) und einem Lösungsmittel, bei niedriger Temperatur 2,4,6-Trifluor-s-triazin zufügt, und den gebildeten Reaktivfarbstoff der Formel (1) isoliert.

Nach beiden Verfahrensvarianten verwendet man vorzugsweise wäßrige Gemische oder Lösungen. Nach Variante a) wird die erste Reaktionsstufe vorzugsweise bei 0 bis 5°C ausgeführt. Nach Variante b) wird die einstufige Reaktion ebenfalls vorzugsweise bei 0 bis 5°C ausgeführt.

Als Alkalifluoride kommen z.B. Lithiumfluorid, Natriumfluorid und Kaliumfluorid in Betracht. Vorzugsweise verwendet man Natriumfluorid, NaF.

Der Rest R ist, falls es sich um einen Alkylrest handelt, geradkettig oder verzweigt; er kann weitersubstituiert sein, z.B. durch Halogen, Hydroxy, Cyan, $C_{1-4}$-Alkoxy, Carboxy oder Sulfo. Als Beispiele für R seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist R Wasserstoff, Methyl oder Aethyl.

Als unsubstituierte oder substituierte Aminogruppen Z in den Fluor-s-triazinylresten kommen in Betracht: $-NH_2$, Alkylamino-, N,N-Dialkylamino-, Cycloalkylamino-, N,N,-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Rest sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfomethyl, Sulfato oder Sulfo. Als Beispiele für derartige Aminogruppen seien genannt: $-NH_2$, Methylamino, Aethylamino, Propylamino, Isopropylamino, Butylamino, Hexylamino, β-Methoxyäthylamino, γ-Methoxypropylamino,β-Aethoxyäthylamino, N,N-Dimethylamino, N,N-Diäthylamino, β-Chloräthylamino, β-Cyanäthlyamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Aethyl-N-phenylamino, N-β-hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 3- oder 4-Sulfatoäthylsulfonyl-phenylamino, 3- oder 4-Vinylsulfonylphenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino und Piperazino.

Als Amine der Formel (3) kommen insbesondere unsubstituierte oder substituierte Aminobenzole in Betracht, z.B. 1-Aminobenzol-2-sulfonsäure, 1-Aminobenzol-3-sulfonsäure, 1-Aminobenzol-4-sulfonsäure, 1-Amino-4-methylbenzol-3-sulfonsäure, 1-Amino-4-methoxybenzol-3-sulfonsäure, 1-Amino-2-methylbenzol-4-sulfonsäure, 1-Amino-3-methylbenzol-4-sulfonsäure, 1-Aminobenzol-3,5-disulfonsäure, 4-Aminobenzoesäure, 2-Amino-5-sulfobenzoesäure, 1-Amino-3-sulfatoäthylsulfonylbenzol, 1-Amino-4-sulfatoäthylsulfonylbenzol, 1-Amino-3-vinylsulfonylbenzol, 1-Amino-4-vinylsulfonylbenzol, 1-Aminobenzol-2,4-disulfonsäure, 1-Aminobenzol-2,5-disulfonsäure, 1-Amino-4-methoxybenzol-2-sulfonsäure, 1-Amino-2-chlorbenzol-4-sulfonsäure, 1-Amino-2,5-dimethoxy-4-sulfatoäthylsulfonylbenzol, 1-Amino-2-methoxy-5-sulfatoäthylsulfonylbenzol, 1-Amino-2,5-dimethoxy-4-vinylsulfonylbenzol, 1-Amino-2-methoxy-5-vinylsulfonylbenzol.

Als Aminofarbstoffe der Formel (2) kommen aminogruppenhaltige Farbstoffe der unter Formel (1) genannten Klassen in Betracht; diese können in der üblichen Weise substituiert sein, z.B. durch Methyl,

Aethyl, Methoxy, Aethoxy, Acetylamino, Benzoylamino, Amino, Chlor, Brom, Ureido, Hydroxy, Carboxy, Sulfomethyl oder Sulfo. Vorzugsweise enthält der Redt D eine oder mehrere Sulfonsäuregruppen.

Als aminogruppenhaltige Farbstoffe kommen insbesondere solche der Formel

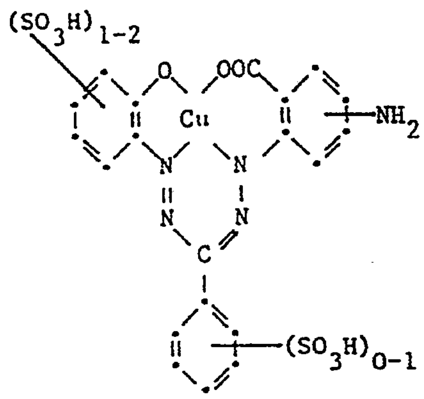

oder

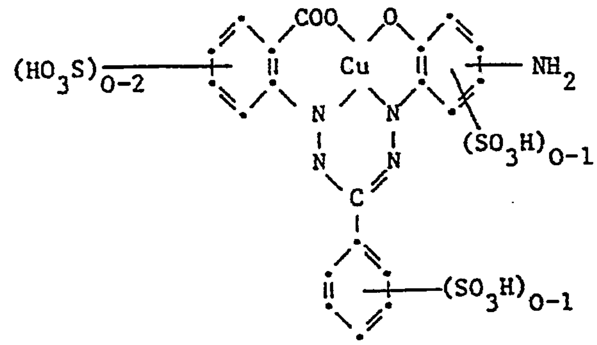

in Betracht, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

Statt einen Aminofarbstoff der Formel (2) zu verwenden, kann man auch von einem Vorprodukt eines Farbstoffs, z.B. einer Diazo- oder Kupplungskomponente, ausgehen, und den Farbstoff nach den Kondensationen fertigstellen.

Das erfindungsgemäße Verfahren liefert Reaktivfarbstoffe der Formel (1) in hoher Ausbeute und großer Reinheit. Die Reaktivfarbstoffe der Formel (1) eignen sich besonders zum Färben von Baumwolle aus wäßrigem Färbebad nach bekannten Verfahren.

Aus der EP-A 0 172 790 ist ein ähnliches Verfahren bekannt, das sich dadurch in charakteristischer Weise von dem erfindungsgemäßen Verfahren unterscheidet, daß die Kondensation von Cyanurfluorid mit Aminen kontinuierlich erfolgt.

In den nachfolgenden Beispielen bedeuten die Teile, sofern nicht anders angegeben, Gewichtsteile, und die Temperaturen sind in Celsiusgraden angegeben.

Beispiel 1

140 g 1-Aminobenzol-3-sulfonsäure werden mit konz. Natriumhydroxydlösung neutral gelöst. Nun gibt man 70 g Natriumfluorid zu, kühlt durch Zugabe von Eis das Reaktionsgemisch auf 0°C und lässt 120 ml konz. Salzsäure zufliessen. Unter sehr gutem Rühren lässt man bei 0°C innert 2 Minuten 110 g 2,4,6-Trifluor-1,3,5-triazin zufliessen und rührt anschliessend noch weitere 5 Minuten. Das so erhaltene Kondensationsprodukt wird im Laufe von 30 Minuten bei 20 bis 25°C und einem pH-Wert von 7,5 bis 8 zu einer neutralen Lösung von 388 g N-(2-Carboxy-5-sulfophenyl)-N'-(2'-hydroxy-3'-amino-5'-sulfophenyl)-ms-phenylformazan, Cu-Komplex gegeben. Nach beendeter Reaktion wird der Farbstoff der Formel

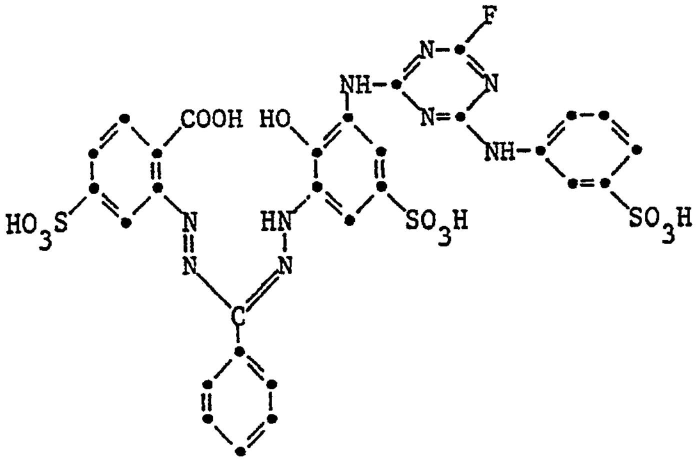

Cu-Komplex

durch Zugabe von Natriumchlorid und Kaliumchlorid ausgesalzen, isoliert und getrocknet. Mit dem Farbstoff kann man Baumwolle und Zellwolle in lichtechten und waschechten blauen Nuancen färben oder bedrucken.

Nach der gleichen Verfahrensweise lassen sich die in der nachfolgenden Tabelle 1 aufgeführten Chromophore umsetzen, indem äquivalente Teile eines Amins der Kolonne 3 gemäss den Angaben des vorangehenden Beispiels mit entsprechenden Teilen 2,4,6-Trifluortriazin umgesetzt werden und anschliessend die Kondensation mit äquivalenten Teilen des Aminofarbstoffes der Kolonne 2 erfolgt.

Tabelle 1

| No | Aminofarbstoff | Amin | Farbton auf Baumwolle |
|---|---|---|---|
| 2 | N-(2-Carboxy-5-sulfophenyl)-N'-(2'-hydroxy-3'-amino-5'-sulfophenyl)-ms-phenylformazan (Cu) | 1-Aminobenzol-3-β-sulfatoäthylsulfon | blau |
| 3 | N-(2-Carboxy-5-sulfophenyl)-N'-(2'-hydroxy-3'-amino-5'-sulfophenyl)-ms-phenylformazan (Cu) | 1-Aminobenzol-4-β-sulfatoäthylsulfon | blau |
| 4 | N-(2-Carboxy-5-sulfophenyl)-N'-(2'-hydroxy-3'-amino-5'-sulfophenyl)-ms-phenylformazan (Cu) | 1-Aminobenzol-4-sulfonsäure | blau |
| 5 | N-(2-Carboxy-5-sulfophenyl)-N'-(2'-hydroxy-3'-amino-5'-sulfophenyl)-ms-phenylformazan (Cu) | 2-Aminonaphthalin-4,8-disulfonsäure | blau |
| 6 | N-(2-Carboxy-5-sulfophenyl)-N'-(2'-hydroxy-3'-amino-5'-sulfophenyl)-ms-(2"-sulfophenyl)-formazan (Cu) | 1-Aminobenzol-3-sulfonsäure | blau |
| 7 | N-(2-Carboxy-5-sulfophenyl)-N'-(2'-hydroxy-3'-amino-5'-sulfophenyl)-ms-(2"-sulfophenyl)-formazan (Cu) | 1-Aminobenzol-2,5-disulfonsäure | blau |
| 8 | N-(2-Carboxy-5-sulfophenyl)-N'-(2'-hydroxy-3'-amino-5'-sulfophenyl)-ms-(2"-sulfophenyl)-formazan (Cu) | 2-Aminonaphthalin-4,8-disulfonsäure | blau |
| 9 | N-(2-Carboxy-5-sulfophenyl)-N'-(2'-hydroxy-3'-amino-5'-sulfophenyl)-ms-(2"-sulfophenyl)-formazan (Cu) | 1-Aminobenzol-3-β-sulfatoäthylsulfon | blau |
| 10 | N-(2-Carboxy-5-sulfophenyl)-N'-(2'-hydroxy-3'-amino-phenyl)-ms-("-sulfophenyl)-formazan (Cu) | 1-Aminobenzol-3-sulfonsäure | blau |
| 11 | N-(2-Carboxy-5-sulfophenyl)-N'-(2'-hydroxy-3'-amino-phenyl)-ms-("-sulfophenyl)-formazan (Cu) | 1-Aminobenzol-2,5-disulfonsäure | blau |
| 12 | N-(2-Carboxy-5-sulfophenyl)-N'-(2'-hydroxy-3'-amino-phenyl)-ms-("-sulfophenyl)-formazan (Cu) | 2-Aminonaphthalin-4,6,8-trisulfonsäure | blau |
| 13 | N-(2-Carboxy-4-sulfophenyl)-N'-(2'-hydroxy-3'-amino-5'-sulfophenyl)-ms-phenyl-formazan (Cu) | 1-Aminobenzol-3-sulfonsäure | blau |
| 14 | N-(2-Carboxy-4-sulfophenyl)-N'-(2'-hydroxy-3'-amino-5'-sulfophenyl)-ms-phenyl-formazan (Cu) | 1-Aminobenzol-2,5-disulfonsäure | blau |
| 15 | N-(2-Carboxy-4-sulfophenyl)-N'-(2'-hydroxy-3'-amino-5'-sulfophenyl)-ms-phenyl-formazan (Cu) | 1-Aminobenzol-3-β-sulfatoäthylsulfon | blau |
| 16 | N-(2-Carboxy-4-sulfophenyl)-N'-(2'-hydroxy-3'-amino-5'-sulfophenyl)-ms-phenyl-formazan (Cu) | 2-Aminonaphthalin-4,8-disulfonsäure | blau |
| 17 | N-(2-Carboxy-4-sulfophenyl)-N'-(2'-hydroxy-3'-amino-5'-sulfophenyl)-ms-phenyl-formazan (Cu) | 2-Aminonaphthalin-4,6,8-trisulfonsäure | blau |
| 18 | N-(2-Carboxy-4-sulfophenyl)-N'-(2'-hydroxy-3'-amino-5'-sulfophenyl)-ms-(3"-sulfophenyl)-formazan (Cu) | 1-Aminobenzol-3-sulfonsäure | blau |
| 19 | N-(2-Carboxy-4-sulfophenyl)-N'-(2'-hydroxy-3'-amino-5'-sulfophenyl)-ms-(3"-sulfophenyl)-formazan (Cu) | 1-Aminobenzol-4-sulfonsäure | blau |
| 20 | N-(2-Carboxy-4-sulfophenyl)-N'-(2'-hydroxy-3'-amino-5'-sulfophenyl)-ms-(3"-sulfophenyl)-formazan (Cu) | 1-Aminobenzol-4-β-sulfatoäthylsulfon | blau |

Tabelle 1 (Fortsetzung)

| No | Aminofarbstoff | Amin | Farbton auf Baumwolle |
|---|---|---|---|
| 41 | N-(2-Carboxy-4-aminophenyl)-N'-(2'-hydroxy-3',5'-disulfophenyl)-ms-(4"-sulfophenyl)-formazan (Cu) | 1-Aminobenzol-4-β-disulfonsäure | blau |
| 42 | N-(2-Carboxy-4-aminophenyl)-N'-(2'-hydroxy-3',5'-disulfophenyl)-ms-(4"-sulfophenyl)-formazan (Cu) | 2-Aminonaphthalin-5-sulfonsäure | blau |
| 43 | N-(2-Carboxy-4-aminophenyl)-N'-(2'-hydroxy-3',5'-disulfophenyl)-ms-(4"-sulfophenyl)-formazan (Cu) | 2-Aminonaphthalin-4,8-disulfonsäure | blau |
| 44 | N-(2-Carboxy-4-aminophenyl)-N'-(2'-hydroxy-3',5'-disulfophenyl)-ms-(2",4"-sulfophenyl)-formazan (Cu) | 1-Aminobenzol-4-sulfonsäure | blau |
| 45 | N-(2-Carboxy-4-aminophenyl)-N'-(2'-hydroxy-3',5'-disulfophenyl)-ms-(2",4"-sulfophenyl)-formazan (Cu) | 1-Aminobenzol-3-sulfonsäure | blau |
| 46 | N-(2-Carboxy-4-aminophenyl)-N'-(2'-hydroxy-3',5'-disulfophenyl)-ms-(2",4"-sulfophenyl)-formazan (Cu) | 1-Aminobenzol-4-β-sulfatoäthylsulfon | blau |
| 47 | N-(2-Carboxy-4-aminophenyl)-N'-(2'-hydroxy-3',5'-disulfophenyl)-ms-(2",4"-sulfophenyl)-formazan (Cu) | 2-Aminonaphthalin-6-sulfonsäure | blau |
| 48 | N-(2-Carboxy-4-aminophenyl)-N'-(2'-hydroxy-3',5'-disulfophenyl)-ms-(2",4"-sulfophenyl)-formazan (Cu) | 2-Aminonaphthalin-8-sulfonsäure | blau |
| 49 | N-(2-Carboxy-4-sulfophenyl)-N'-(2'-hydroxy-5'-amino-3'-sulfophenyl)-ms-phenyl-formazan (Cu) | 1-Aminobenzol-3-sulfonsäure | blau |
| 50 | N-(2-Carboxy-4-sulfophenyl)-N'-(2'-hydroxy-5'-amino-3'-sulfophenyl)-ms-phenyl-formazan (Cu) | 1-Aminobenzol-3-β-sulfatoäthylsulfon | blau |
| 51 | N-(2-Carboxy-4-sulfophenyl)-N'-(2'-hydroxy-5'-amino-3'-sulfophenyl)-ms-phenyl-formazan (Cu) | 1-Aminobenzol-2,4-disulfonsäure | blau |
| 52 | N-(2-Carboxy-4-sulfophenyl)-N'-(2'-hydroxy-5'-amino-3'-sulfophenyl)-ms-phenyl-formazan (Cu) | 2-Aminonaphthalin-4,8-disulfonsäure | blau |
| 53 | N-(2-Carboxy-4-sulfophenyl)-N'-(2'-hydroxy-5'-amino-3'-sulfophenyl)-ms-(2"-sulfophenyl)-formazan (Cu) | 1-Aminobenzol-3-sulfonsäure | blau |
| 54 | N-(2-Carboxy-4-sulfophenyl)-N'-(2'-hydroxy-5'-amino-3'-sulfophenyl)-ms-(2"-sulfophenyl)-formazan (Cu) | 2-Aminonaphthalin-4,8-disulfonsäure | blau |
| 55 | N-(2-Carboxy-4-sulfophenyl)-N'-(2'-hydroxy-5'-amino-3'-sulfophenyl)-ms-(4"-sulfophenyl)-formazan (Cu) | 1-Aminobenzol-3-sulfonsäure | blau |
| 56 | N-(2-Carboxy-4-sulfophenyl)-N'-(2'-hydroxy-3',5'-disulfophenyl)-ms-(3"-aminophenyl)-formazan (Cu) | 1-Aminobenzol-3-sulfonsäure | blau |
| 57 | N-(2-Hydroxy-5-amino-3-sulfophenyl)-N'-(2',5-disulfophenyl)-ms-phenyl-formazan (Cu) | 1-Aminobenzol-3-sulfonsäure | blau |
| 58 | N-(2-Hydroxy-3-amino-5-sulfophenyl)-N'-(2'-hydroxy-4'-sulfophenyl)-ms-(2"-sulfophenyl)-formazan (Cu) | 1-Aminobenzol-3-sulfonsäure | blau |
| 59 | N-(2-Hydroxy-5-sulfophenyl)-N'-(2'-hydroxy-3',5'-disulfophenyl)-ms-(4"-aminophenyl)-formazan (Cu) | 1-Aminobenzol-3-sulfonsäure | blau |

Tabelle 1 (Fortsetzung)

| No | Aminofarbstoff | Amin | Farbton auf Baumwolle |
|---|---|---|---|
| 41 | N-(2-Carboxy-4-aminophenyl)-N'-(2'-hydroxy-3',5'-disulfophenyl)-ms-(4"-sulfophenyl)-formazan (Cu) | 1-Aminobenzol-4-β-disulfonsäure | blau |
| 42 | N-(2-Carboxy-4-aminophenyl)-N'-(2'-hydroxy-3',5'-disulfophenyl)-ms-(4"-sulfophenyl)-formazan (Cu) | 2-Aminonaphthalin-5-sulfonsäure | blau |
| 43 | N-(2-Carboxy-4-aminophenyl)-N'-(2'-hydroxy-3',5'-disulfophenyl)-ms-(4"-sulfophenyl)-formazan (Cu) | 2-Aminonaphthalin-4,8-disulfonsäure | blau |
| 44 | N-(2-Carboxy-4-aminophenyl)-N'-(2'-hydroxy-3',5'-disulfophenyl)-ms-(2",4"-sulfophenyl)-formazan (Cu) | 1-Aminobenzol-4-sulfonsäure | blau |
| 45 | N-(2-Carboxy-4-aminophenyl)-N'-(2'-hydroxy-3',5'-disulfophenyl)-ms-(2",4"-sulfophenyl)-formazan (Cu) | 1-Aminobenzol-3-sulfonsäure | blau |
| 46 | N-(2-Carboxy-4-aminophenyl)-N'-(2'-hydroxy-3',5'-disulfophenyl)-ms-(2",4"-sulfophenyl)-formazan (Cu) | 1-Aminobenzol-4-β-sulfatoäthylsulfon | blau |
| 47 | N-(2-Carboxy-4-aminophenyl)-N'-(2'-hydroxy-3',5'-disulfophenyl)-ms-(2",4"-sulfophenyl)-formazan (Cu) | 2-Aminonaphthalin-6-sulfonsäure | blau |
| 48 | N-(2-Carboxy-4-aminophenyl)-N'-(2'-hydroxy-3',5'-disulfophenyl)-ms-(2",4"-sulfophenyl)-formazan (Cu) | 2-Aminonaphthalin-8-sulfonsäure | blau |
| 49 | N-(2-Carboxy-4-sulfophenyl)-N'-(2'-hydroxy-5'-amino-3'-sulfophenyl)-ms-phenyl-formazan (Cu) | 1-Aminobenzol-3-sulfonsäure | blau |
| 50 | N-(2-Carboxy-4-sulfophenyl)-N'-(2'-hydroxy-5'-amino-3'-sulfophenyl)-ms-phenyl-formazan (Cu) | 1-Aminobenzol-3-β-sulfatoäthylsulfon | blau |
| 51 | N-(2-Carboxy-4-sulfophenyl)-N'-(2'-hydroxy-5'-amino-3'-sulfophenyl)-ms-phenyl-formazan (Cu) | 1-Aminobenzol-2,4-disulfonsäure | blau |
| 52 | N-(2-Carboxy-4-sulfophenyl)-N'-(2'-hydroxy-5'-amino-3'-sulfophenyl)-ms-phenyl-formazan (Cu) | 2-Aminonaphthalin-4,8-disulfonsäure | blau |
| 53 | N-(2-Carboxy-4-sulfophenyl)-N'-(2'-hydroxy-5'-amino-3'-sulfophenyl)-ms-(2"-sulfophenyl)-formazan (Cu) | 1-Aminobenzol-3-sulfonsäure | blau |
| 54 | N-(2-Carboxy-4-sulfophenyl)-N'-(2'-hydroxy-5'-amino-3'-sulfophenyl)-ms-(2"-sulfophenyl)-formazan (Cu) | 2-Aminonaphthalin-4,8-disulfonsäure | blau |
| 55 | N-(2-Carboxy-4-sulfophenyl)-N'-(2'-hydroxy-5'-amino-3'-sulfophenyl)-ms-(4"-sulfophenyl)-formazan (Cu) | 1-Aminobenzol-3-sulfonsäure | blau |
| 56 | N-(2-Carboxy-4-sulfophenyl)-N'-(2'-hydroxy-3',5'-disulfophenyl)-ms-(3"-aminophenyl)-formazan (Cu) | 1-Aminobenzol-3-sulfonsäure | blau |
| 57 | N-(2-Hydroxy-5-amino-3-sulfophenyl)-N'-(2',5-disulfophenyl)-ms-phenyl-formazan (Cu) | 1-Aminobenzol-3-sulfonsäure | blau |
| 58 | N-(2-Hydroxy-3-amino-5-sulfophenyl)-N'-(2'-hydroxy-4'-sulfophenyl)-ms-(2"-sulfophenyl)-formazan (Cu) | 1-Aminobenzol-3-sulfonsäure | blau |
| 59 | N-(2-Hydroxy-5-sulfophenyl)-N'-(2'-hydroxy-3',5'-disulfophenyl)-ms-(4"-aminophenyl)-formazan (Cu) | 1-Aminobenzol-3-sulfonsäure | blau |

| No | Aminofarbstoff | Amin | Farbton auf Baumwolle |
|---|---|---|---|
| 60 | 1-Amino-3-acetylaminobenzol-6'-sulfonsäure→1-Amino-8-hydroxy-2-(4'-sulfophenylazo)-naphthalin-3,6-disulfonsäure (verseift) | 1-Aminobenzol-3-sulfonsäure | blau |
| 61 | 1-Amino-3-acetylaminobenzol-6'-sulfonsäure→1-Amino-8-hydroxy-2-(4'-sulfophenylazo)-naphthalin-3,6-disulfonsäure (verseift) | 1-Aminobenzol-3-β-sulfatoäthylsulfon | blau |
| 62 | 1-Amino-3-acetylaminobenzol-6'-sulfonsäure→1-Amino-8-hydroxy-2-(4'-sulfophenylazo)-naphthalin-3,6-disulfonsäure (verseift) | 1-Aminobenzol-4-β-sulfatoäthylsulfon | blau |
| 63 | 1-Amino-3-acetylaminobenzol-6'-sulfonsäure→1-Amino-8-hydroxy-2-(4'-sulfophenylazo)-naphthalin-3,6-disulfonsäure (verseift) | 2-Aminonaphthalin-4,8-disulfonsäure | blau |
| 64 | 1-Amino-3-acetylaminobenzol-6-sulfonsäure→1-Amino-8-hydroxy-2-(2',5'-disulfophenylazo)-naphthalin-3,6-disulfonsäure (verseift) | 1-Aminobenzol-3-sulfonsäure | blau |
| 65 | 1-Amino-3-acetylaminobenzol-6-sulfonsäure→1-Amino-8-hydroxy-2-(2',5'-disulfophenylazo)-naphthalin-3,6-disulfonsäure (verseift) | 1-Aminobenzol-4-β-sulfatoäthylsulfon | blau |
| 66 | 1-Amino-2-hydroxy-6-nitronaphthalin-4-sulfonsäure→1-Amino-8-hydroxynaphthalin-2,4-disulfonsäure (reduziert) (Cu) | 1-Aminobenzol-3-sulfonsäure | blau |
| 67 | 1-Amino-3-acetylaminobenzol-6-sulfonsäure→1-Benzoylamino-8-hydroxynaphthalin-3,6-disulfonsäure (Acetylaminogruppe verseift) | 1-Aminobenzol-3-sulfonsäure | rot |
| 68 | 1-Amino-3-acetylaminobenzol-6-sulfonsäure→1-Aethyl-3-aminocarbonyl-4-methyl-6-hydroxy-pyridon-(2) (verseift) | 1-Aminobenzol-3-sulfonsäure | gelb |

Tabelle 1 (Fortsetzung)

Beispiel 69

Man löst 23,8 g N-(2-Carboxy-5-sulfophenyl)-N'-(2'-hydroxy-3'-amino-5'-sulfophenyl)-ms-phenylformazan, Cu-Komplex, in 250 ml Wasser, wobei ein pH-Wert von 5,3 resultiert. In diese Lösung werden 8,6 g 1-Aminobenzol-3-sulfonsäure eingetragen (pH-Wert sinkt auf 3,5) und anschliessend 4,3 g Natriumfluorid (pH-Wert steigt wieder auf 5,3). Man kühlt die Reaktionslösung auf 0°C und stellt mit wenig Salzsäure 2N den pH-Wert auf 4,9. Unter gutem Rühren werden innert 3 Minuten 6,8 g 2,4,6-Trifluortriazin zugetropft. Nach 5 Minuten wird der pH-Wert der Reaktionslösung mit Natriumhydroxydlösung 2N bei 0 bis 5°C langsam auf 7,5 gestellt. Anschliessend lässt man die Temperatur allmählich auf 20°C ansteigen, um die Umsetzung mit dem Farbstoff-Chromophor zu vervollständigen.

Der Farbstoff der Formel

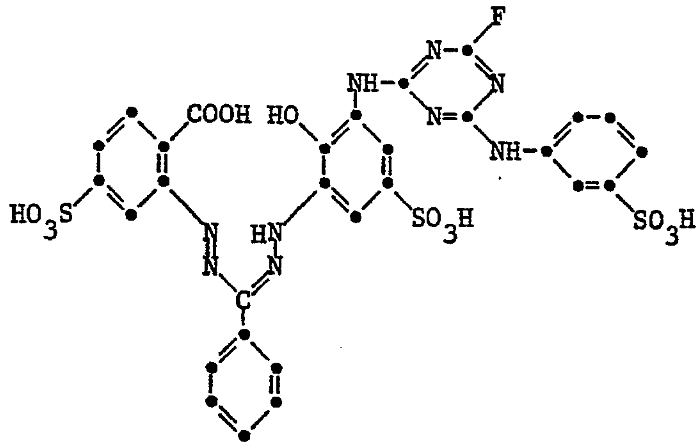

Cu-Komplex

wird mit Natriumchlorid und Kaliumchlorid ausgesalzen, isoliert und getrocknet. Er färbt Baumwolle aus langer Flotte in licht- und nassechten blauen Tönen.

## Patentansprüche

1. Verfahren zur Herstellung von Reaktivfarbstoffen der Formel

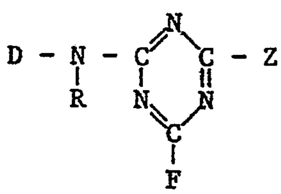

(1)

worin D ein sulfogruppenhaltiger Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoff, R Wasserstoff oder gegebenenfalls substituiertes $C_1$–$C_4$-Alkyl, und Z eine gegebenenfalls substituierte Aminogruppe ist, durch Kondensation von 2,4,6-Trifluor-s-triazin mit einem Aminofarbstoff der Formel

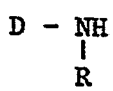

(2)

und einem Amid der Formel

$$H - Z \quad (3)$$

dadurch gekennzeichnet, daß man 2,4,6-Trifluor-s-triazin in stark saurer Lösung und in Gegenwart eines Alkalifluorids mit einem Amin der Formel (3) in diskontinuierlicher Weise kondensiert, und anschließend das erhaltene primäre Kondensationsprodukt der Formel

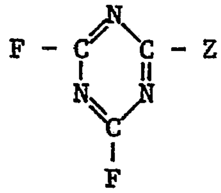

(4)

mit einem Aminofarbstoff der Formel (2) zu einem Reaktivfarbstoff der Formel (1) kondensiert.

2. Verfahren gemäß Anspruch 1, dadurch gekennzeichnet, daß man die Umsetzungen in wäßrigen Mischungen ausführt.

3. Verfahren gemäß Anspruch 2, dadurch gekennzeichnet, daß man die Umsetzungen bei niedrigen Temperaturen ausführt.

4. Verfahren gemäß Anspruch 1, dadurch gekennzeichnet, daß man als Alkalifluorid NaF verwendet.

5. Verfahren gemäß Anspruch 1, dadurch gekennzeichnet, daß man als Amin der Formel (3) ein gegebenenfalls substituiertes Aminobenzol verwendet.

6. Verfahren gemäß Anspruch 1, dadurch gekennzeichnet, daß man als Aminofarbstoff der Formel (2) einen Formazan-Kupferkomplex-Farbstoff verwendet.

7. Verfahren gemäß Anspruch 6, zur Herstellung eines Reaktivfarbstoffes der Formel

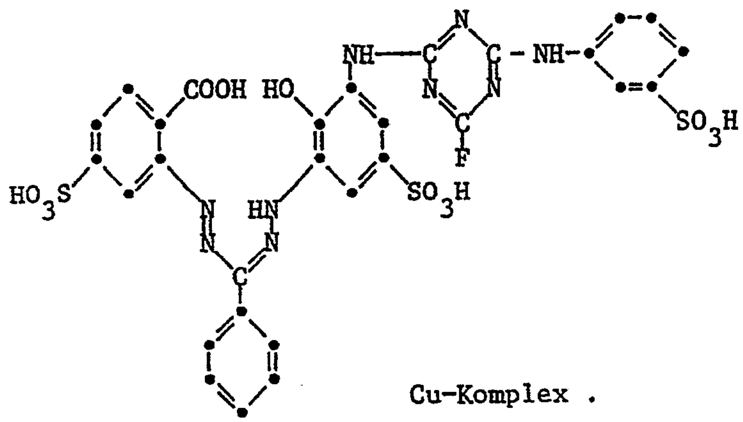

Cu-Komplex .

8. Verwendung der nach dem Verfahren gemäß Anspruch 1 erhaltenen Reaktivfarbstoffe zum Färben oder Bedrucken von Cellulosefasern.

**Claims**

1. A process for the preparation of reactive dyes of the formula

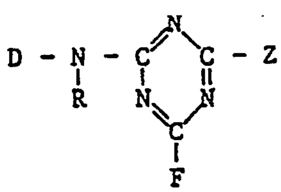 (1)

in which D is a monoazo or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye containing sulfo groups, R is hydrogen or substituted or unsubstituted $C_1$–$C_4$-alkyl, and Z is a substituted or unsubstituted amino group, by subjecting 2,4,6-trifluoro-s-triazine to a condensation reaction with an amino dye of the formula

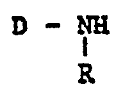 (2)

and an amine of the formula

$$H - Z \quad (3)$$

which comprises subjecting 2,4,6-trifuloro-s-triazine to a batchwise condensation reaction with an amine of the formula (3) in a strongly acid solution and in the presence of an alkali metal fluoride, and then subjecting the resulting primary condensation product of the formula

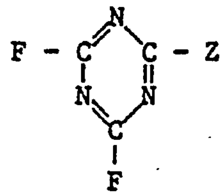

(4)

to a condensation reaction with an amino dye of the formula (2) to give a reactive dye of the formula (1).

2. A process according to claim 1, wherein the the (sic) reactions are carried out in aqueous mixtures.

3. A process according to claim 2, wherein the reactions are carried out at low temperatures.

4. A process according to claim 1, wherein the alkali metal fluoride used is NaF.

5. A process according to claim 1, wherein the amine of the formula (3) used is a substituted or unsubstituted aminobenzene.

6. A process according to claim 1, wherein the amino dye of the formula (2) used is a formazan copper complex dye.

7. A process according to claim 6, for the preparation of a reactive dye of the formula

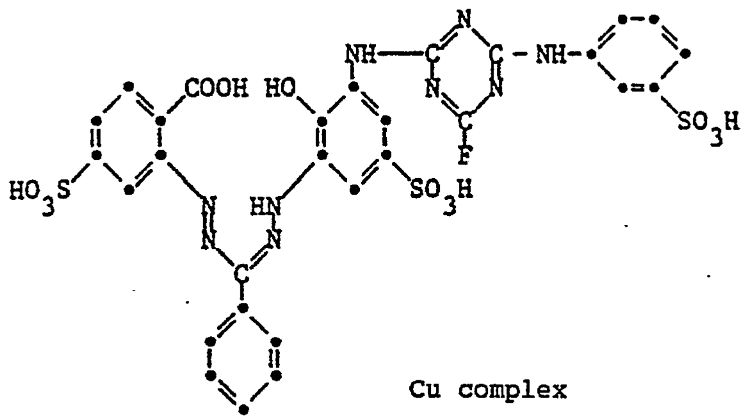

Cu complex

8. The use of the reactive dyes obtained by the process according to claim 1 for dyeing or printing cellulose fibres.

**Revendications**

1. Procédé pour la préparation de colorants réactifs de formule

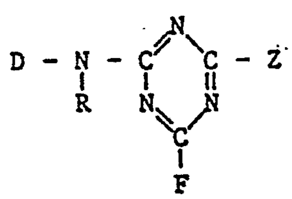

(1)

dans laquelle D est un colorant mono- ou polyazoïque, azoïque à complexe métallique, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide, contenant des groupes sulfo; R est un atome d'hydrogène ou un radical alkyle en $C_1$–$C_4$ éventuellement substitué; et Z est un groupe amino éventuellement substitué, par condensation de la 2,4,6-trifluoro-s-triazine avec un colorant aminé de formule

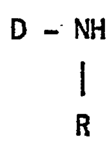

(2)

et une amine de formule

$$H - Z \qquad (3)$$

caractérisé en ce que l'on condense avec une amine de formule (3), de façon discontinue, la 2,4,6-trifluoro-s-triazine en solution fortement acide et en présence d'un fluorure alcalin, et on condense ensuite le produit de condensation primaire obtenu, de formule

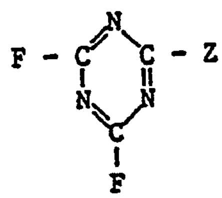

(4)

avec un colorant aminé de formule (2), pour aboutier à un colorant réactif de formule (1).

2. Procédé selon la revendication 1, caractérisé en ce que l'on effectue les réactions dans des mélanges aqueux.

3. Procédé selon la revendication 2, caractérisé en ce que l'on effectue les réactions à basses températures.

4. Procédé selon la revendication 1, caractérisé en ce que l'on utilise NaF en tant que fluorure alcalin.

5. Procédé selon la revendication 1, caractérisé en ce que, en tant qu'amine de formule (3), on utilise un aminobenzène éventuellement substitué.

6. Procédé selon la revendication 1, caractérisé en ce que, en tant que colorant aminé de formule (2), on utilise un colorant formazancomplexe de cuivre.

7. Procédé selon la revendication 6, pour la préparation d'un colorant réactif de formule

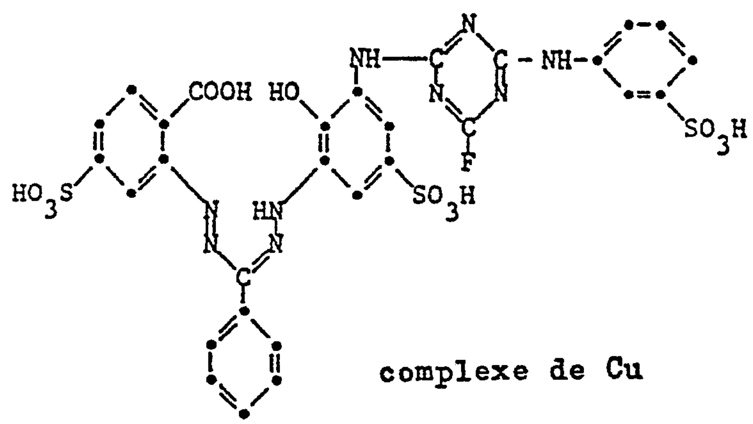

complexe de Cu

8. Utilisation des colorants réactifs obtenus par le procédé selon la revendication 1, pour la teinture ou l'impression de fibres de cellulose.